# EUROPÄISCHE PATENTSCHRIFT

(11) **EP 2 253 877 B1**
(45) Veröffentlichungstag und Bekanntmachung des Hinweises auf die Patenterteilung: **26.08.2015**
(21) Anmeldenummer: 10005200.0
(22) Anmeldetag: 18.05.2010
(51) Int. Cl.: F16L 55/033

(54) **Flüssigkeitsschalldämpfer**
Fluid acoustic dampener
Amortisseur de bruit de liquide

(30) Priorität: 18.05.2009 DE 102009021683
(43) Veröffentlichungstag der Anmeldung: 24.11.2010
(73) Patentinhaber: Hydac Technology Gmbh, 66280 Sulzbach / Saar (DE)
(72) Erfinder: Groben, Martin, 66280 Sulzbach (DE); Lehnert, Markus, 66763 Dillingen (DE)
(74) Vertreter: Bartels & Partner

(56) Entgegenhaltungen:
- US-A- 3 744 527
- US-A- 5 735 313

## Beschreibung

Die Erfindung betrifft einen Flüssigkeitsschalldämpfer zur Abschwächung von Druck- und/oder Schallschwingungen bei Druckfluidsystemen gemäß der Merkmalsausgestaltung des Patentanspruchs 1.

In Druckfluidsystemen können anlagebedingte Vorgänge unterschiedlichster Art zu Druckschwankungen führen, etwa durch schlagartiges Verbinden von Fluidräumen mit unterschiedlichem Druckniveau, durch Betätigung von Absperr- und Reglerarmaturen mit kurzen Öffnungs- und Schließzeiten und insbesondere durch Ungleichförmigkeiten beim Betrieb von Pumpen, wobei sich Pumpenpulsationen ergeben können.

Zur Abschwächung von Druckschwankungen, periodischen Druckschwankungen oder resultierenden Schallschwingungen sind Dämpferanordnungen unterschiedlicher Bauweise bekannt. Zu nennen sind beispielsweise Blasen-, oder Membran-, oder Kolbenspeicher sowie Pulsationsschalldämpfer (fachsprachlich auch Silencer genannt).

Solche Reflexions- oder Flüssigkeitsschalldämpfer bestehen im wesentlichen aus einem Dämpfergehäuse mit einer eine Gehäuselängsachse definierenden Hauptabmessung und einem sich in Richtung der Gehäuselängsachse vorzugsweise koaxial zu dieser erstreckenden Dämpfungsrohr mit zumindest einer radialen Öffnung. Das Dämpfungsrohr ist durch das Dämpfergehäuse geführt und durchragt dichtend eine Eintrittsöffnung und eine Austrittsöffnung des Dämpfergehäuses. Die Größe und die Position in Längsachse des Dämpfungsrohres und die Abmessungen der Öffnung beeinflussen die Dämpfungseigenschaften des Flüssigkeitsschalldämpfers wesentlich.

Bei den bekannten Flüssigkeitsschalldämpfern ist diese Öffnung - oder auch mehrere Öffnungen - an dem Dämpfungsrohr fest von der Position her vorgegeben. Eine optimierte Wirkung des Flüssigkeitsschalldämpfers oder Reflexionsdämpfers ist in Abhängigkeit von der jeweiligen Auslegung des Druckfluidsystems nicht immer gegeben. Eine Adaption des Flüssigkeitsschalldämpfers an das jeweilige Druckfluidsystem ist insoweit erschwert.

Durch die US 3 744 527 A ist ein gattungsgemäßer Flüssigkeitsschalldämpfer zur Abschwächung von Druck- und/oder Schallschwingungen bei Druckfluidsystemen bekannt, mit einem Dämpfergehäuse mit einer eine Gehäuselängsachse definierenden Hauptabmessung und einem sich in Richtung der Gehäuselängsachse zwischen einer Eintrittsöffnung und einer Austrittsöffnung in dem Dämpfergehäuse sich erstreckenden Dämpfungsrohr mit zumindest einer radialen Öffnung. Der bekannte Schalldämpfer weist eine Einrichtung zur Veränderung der Größe der zumindest einen Öffnung in dem Dämpfungsrohr auf, indem in koaxialer Anordnung zu dem Dämpfungsrohr ein zweites Rohr stationär aufgesetzt ist, das mit einer Vielzahl von weiteren Öffnungen versehen ist, die zumindest teilweise in Überdeckung mit der jeweiligen Öffnung des Dämpfungsrohres sind und die einem Fluid- oder Medientransport zwischen dem Inneren des Dämpfungsrohres und dem Inneren einer Speicherblase dienen, die elastisch bewegbar zwischen dem Inneren des Dämpfergehäuses und dem Dämpfungsrohr bewegbar angeordnet ist. Die weiteren Öffnungen im zweiten Rohr sind gegenüber den Öffnungen im Dämpfungsrohr vom Durchmesser her gering gehalten, um eine Beschädigung der elastischen Speichermembran bei ihrer Bewegung vermeiden zu helfen. Auch bei dieser Lösung ist eine Adaption des Flüssigkeitsschalldämpfers an das jeweilige Druckfluidsystem durch die stationäre Anordnung des zweiten Rohres auf dem Dämpfungsrohr insoweit erschwert.

Im Hinblick auf diese Problematik stellt sich die Erfindung die Aufgabe, einen Flüssigkeitsschalldämpfer anzugeben, dessen Dämpfungseigenschaften an ein Druckfluidsystem adaptierbar und veränderbar ausgebildet sind.

Erfindungsgemäß ist diese Aufgabe durch einen Flüssigkeitsschalldämpfer gelöst, der die Merkmale des Patentanspruches 1 in seiner Gesamtheit aufweist.

Danach besteht die wesentliche Besonderheit der Erfindung darin, dass das Rohr in Längsrichtung und/oder Umfangsrichtung des Dämpfungsrohres auf diesem verschiebbar gestaltet ist. Aufgrund dieser Ausgestaltung kann bereichsweise Fluid in eine bestimmte Richtung und in ein bestimmtes Teilvolumen des Dämpfergehäuses abgegeben werden, wodurch es ermöglicht ist, gegenüber den bekannten Lösungen im Stand der Technik die Dämpfung des Flüssigkeitsschalldämpfers auch während des Betriebs des Druckfluidsystems adaptiv zu optimieren.

Um während des Betriebes des Druckfluidsystems die Dämpfungseigenschaften des Reflexionsschalldämpfers oder Flüssigkeitsschalldämpfers zu verändern, empfiehlt sich eine Eingriffs- oder Betätigungsmöglichkeit der Einrichtung von einer Außenseite des Dämpfergehäuses her.

Bei einem besonders bevorzugten Ausführungsbeispiel der Erfindung ist die Einrichtung zur Veränderung der Position und/oder der Größe der Öffnung im Dämpferrohr im wesentlichen aus dem dichtend das Dämpferrohr umschließenden Rohr gebildet, das auf dem Dämpferrohr verschoben und/oder gedreht werden kann und dass eine Öffnung aufweist, die teilweise oder ganz mit der jeweils zuordenbaren Öffnung in dem Dämpfungsrohr zur Deckung gebracht werden kann und mit dessen Hilfe der lichte Querschnitt der Öffnung in dem Dämpfungsrohr variabel gestaltbar ist.

Ist beispielsweise die Öffnung in dem Dämpfungsrohr als Schlitz ausgebildet, der sich über einen Teilbereich der axialen Länge des Dämpfungsrohres erstreckt, so kann durch Verschieben und/oder Verdrehen des die Einrichtung bildenden Rohres und dessen radiale Öffnung die Position der Öffnung, die von dem Dämpfungsrohr in das Innere des Dämpfergehäuses mündet, verändert, insbesondere vergrößert oder verkleinert werden.

Es kann auch vorteilhaft sein, für ein besonders bevorzugtes Ausführungsbeispiel des Flüssigkeitsschalldämpfers beide Öffnungen in dem Dämp-fungsrohr und dem die Einrichtung zur Veränderung der Position bildenden Rohr als wendelförmige Schlitze auszubilden, deren Steigungsrichtung zueinander invers verlaufend sind. Durch diese konstruktive Maßnahme ergibt sich stets ein rautenförmiger Überschneidungsbereich der beiden Schlitze und somit eine durch Verdrehen des Rohres auf dem Dämpfungsrohr sich über die ganze Länge des Dämpfungsrohres verschiebbare Durchgangsöffnung vom Inneren des Dämpfungsrohres in das innere Volumen des Dämpfergehäuses.

In besonders vorteilhafter Weise ist dabei der Betrag der Steigung der beiden Schlitze etwa gleich oder gleich groß zu wählen. Die Steigung ist vorzugsweise derart groß gewählt, dass die Schlitze nur über einen Teilumfang der beiden Rohre geführt sind.

Ist das auf dem Dämpfungsrohr bewegbare Rohr drehfest mit einem Flansch, der die Eintrittsöffnung und/oder die Austrittsöffnung durchragt, verbunden, so ist eine von außen betätigbare Einrichtung geschaffen, mit Hilfe deren beispielsweise durch Drehen des Flansches die Öffnung des Dämpfungsrohres über dessen Länge verschoben und/oder vergrößert sowie verkleinert werden kann.

In dem Dämpfungsrohr lassen sich auch mehrere Öffnungen oder Schlitze über dessen Umfang anordnen. Ebenso bei dem über das Dämpfungsrohr gestülpten Rohr. Die Schlitze können unterschiedliche lichte Weiten oder sonstige charakteristische Abmessungen aufweisen.

Nachstehend ist die Erfindung anhand von in der Zeichnung dargestellten Ausführungsbeispielen im einzelnen erläutert.

Es zeigen:
- Fig. 1: einen Längsschnitt durch ein Ausführungsbeispiel des erfindungsgemäßen Flüssigkeitsschalldämpfers;
- Fig. 2: eine schematische und perspektivische Ansicht einer Einrichtung zur Veränderung der Position und/oder der Größe der Öffnung in dem Dämpfungsrohr;
- Fig. 3: eine perspektivische Schrägansicht lediglich des Dämpfungsrohres und des umgebenden Rohres zur Veränderung von Position und Größe der Öffnung für ein zweites Ausführungsbeispiel und
- Fig. 4 und 5: entsprechende Schrägansichten der Rohre für ein drittes bzw. viertes Ausführungsbeispiel.

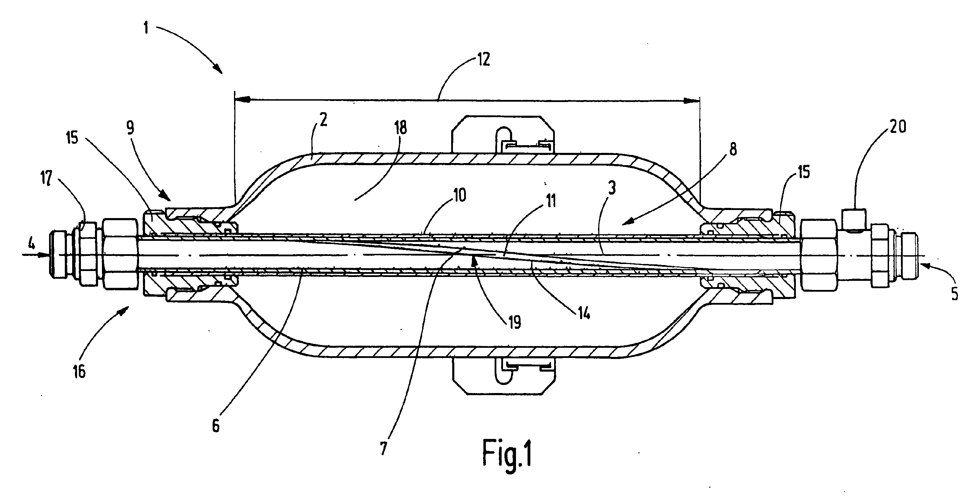

In Fig.1 ist in einem Längsschnitt ein als Reflexionsdämpfer (fachsprachlich auch mit Silencer bezeichnet) gebildeter Flüssigkeitsschalldämpfer 1 für eine hydraulische Anlage gezeigt. Der Flüssigkeitsschalldämpfer 1 besteht im wesentlichen aus einem langgestreckten Dämpfergehäuse 2, dessen Hauptabmessung eine Gehäuselängsachse 3 definiert.

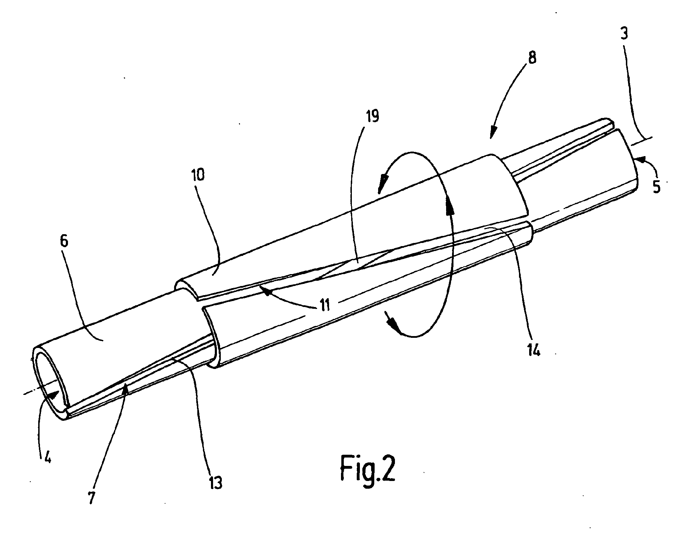

Das Dämpfergehäuse 2 ist an seinem stromaufseitigen Ende 16 über einen Flansch 17 mit einer Druckmittelquelle oder sonstigen Druckmittelversorgung verbunden, die auch Bestandteil des Arbeitskreises einer nicht näher dargestellten Hydraulikanlage sein kann. In seiner Eigenschaft als Reflexionsdämpfer, d.h. als Resonator mit Interferenzwirkung, enthält das Dämpfergehäuse 2 ein Dämpfungsrohr 6, das sich koaxial zu der Gehäuselängsachse 3 zwischen einer Eintrittsöffnung 4 und einer Austrittsöffnung 5 des Dämpfergehäuses 2 erstreckt. Wie insbesondere die Fig.2 in einer schematischen, perspektivischen Ansicht zeigt, weist das Dämpfungsrohr 6 einen wendelförmigen mit sehr großer Steigung versehenen, um einen Teilumfangsbereich geführten Schlitz 13 auf. Der Schlitz 13 dient als Öffnung 7, welche das Innere des Dämpfungsrohres 6 mit dem Inneren des Dämpfergehäuses 2 verbindet, wodurch eine Kopplung der Fluidschwingungen im Dämpfungsrohr 6 mit dem dieses umgebenden Fluidvolumen 18 innerhalb des Dämpfergehäuses 2 bewirkt ist.

Um das Dämpfungsrohr 6 ist dichtend ein Rohr 10 über die gesamte axiale Länge 12 des Dämpfungsrohres 6 gelegt, wobei das Rohr 10 drehfest mit je einem aus der Eintrittsöffnung 4 und der Austrittsöffnung 5 geführten Flansch 15 verbunden ist. Die an ihrem Außenumfang eine Schlüsselweite tragenden Flansche 15 ermöglichen ein Verdrehen des Rohres 10 im Inneren des Dämpfergehäuses 2 von einer Außenseite 9 des Dämpfergehäuses 2 relativ zu dem Dämpfungsrohr 6.

Das Rohr 10 weist einen wendelförmig um einen Teilumfangsbereich mit großer Steigung geführten Schlitz 14 als Öffnung 11 auf. Die Steigungsrichtung des Schlitzes 14 in dem Rohr 10 ist invers zu der Steigungsrichtung des Schlitzes 13 in dem Dämpfungsrohr 6 ausgebildet, so dass sich im Überdeckungsbereich der beiden Schlitze 13,14 eine rautenförmige Öffnung 19 ergibt, die zur Fluidkopplung dient (vgl. Fig.2).

Durch Drehen des Rohres 10 ist damit eine Einrichtung 8 geschaffen, mit Hilfe deren die Öffnung 19 zur Fluidkopplung zwischen dem Fluidstrom im Inneren des Dämpfungsrohres 6 mit dem Fluidvolumen 18 in dem Dämpfergehäuse 2 über die Länge des Dämpfungsrohres 6 und auch teilweise über dessen Umfang verschoben werden kann. Mit Hilfe eines Sensors 20, der vorzugsweise als Drucksensor ausgebildet ist, kann die Druckamplitude am Ausgang des Flüssigkeitsschalldämpfers 1 gemessen werden, so dass die Dämpfung des Flüssigkeitsschalldämpfers 1 dergestalt optimierbar ist.

Auch besteht die Möglichkeit, eine Einstellung des Silencers über die hörbare Gehäuschentwicklung im Betrieb vorzunehmen. Besonders vorteilhaft ist, dass dergestalt mit nur einem Silencer ein weiter Bereich an abzudeckenden Frequenzbändern bedient werden kann und wird beispielsweise ein eingesetzter Silencer an einer anderen Stelle oder bei einer anderen Anlage benötigt, läßt er sich dort ohne weiteres einsetzen und erneut einstellen. Sofern man für die Einstellflansche 15 einen motorischen Antrieb vorsieht, läßt sich insoweit ein Einstellvorgang auch vollständig automatisieren, indem beispielsweise eine nicht näher dargestellte Steuerung die Sensorsignale des Sensors 20 erfaßt und in einen entsprechenden Einstellvorgang für das drehbare Rohr 10 umsetzt.

Es kann, wie vorstehend dargelegt, das Dämpfungsrohr 6 feststehen und das Rohr 10 als Teil der Einstelleinrichtung 8 bewegbar ausgebildet sein; es besteht aber auch die Möglichkeit, das Rohr 10 festzusetzen und das Dämpfungsrohr 6 entsprechend drehbar oder axial verschiebbar auszugestalten, um dergestalt die notwendige Anpassung an die Betriebszustände für den Silencer vornehmen zu können. Ferner besteht auch die Möglichkeit, beide Rohre 6,10 relativ zueinander zu bewegen (nicht dargestellt).

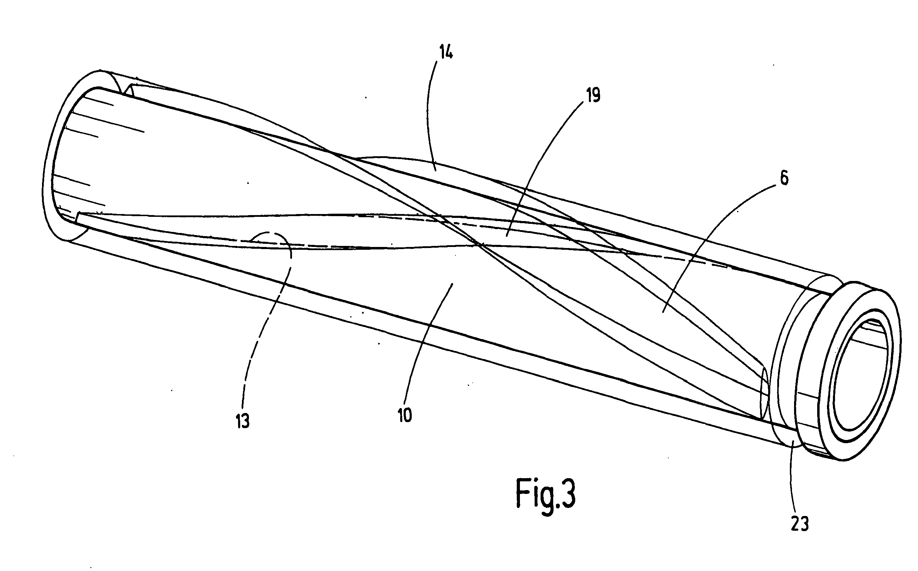

Das in Fig. 3 gezeigte, weitere Ausführungsbeispiel unterscheidet sich vom Beispiel von Fig. 2 durch die Gestaltung des wendelförmigen Schlitzes 14 im drehbaren äußeren Rohr 10. Während der wendelförmige Schlitz 13 im inneren Dämpfungsrohr 6 eine gleichbleibende Schlitzbreite über die Schlitzlänge besitzt, wie es auch bei dem Beispiel von Fig. 2 der Fall ist, ist der Schlitz 14 im äußeren Rohr 10 so geformt, dass seine Schlitzbreite, von einem Schlitzende 23 ausgehend, bis zum anderen Schlitzende hin zunimmt, wobei die Zunahme stetig erfolgt. Somit kann die resultierende Öffnung 19 nicht nur über die Rohrlänge und den Rohrumfang verschoben werden, sondern es ändert sich bei der Verschiebung auch die Öffnungsgröße.

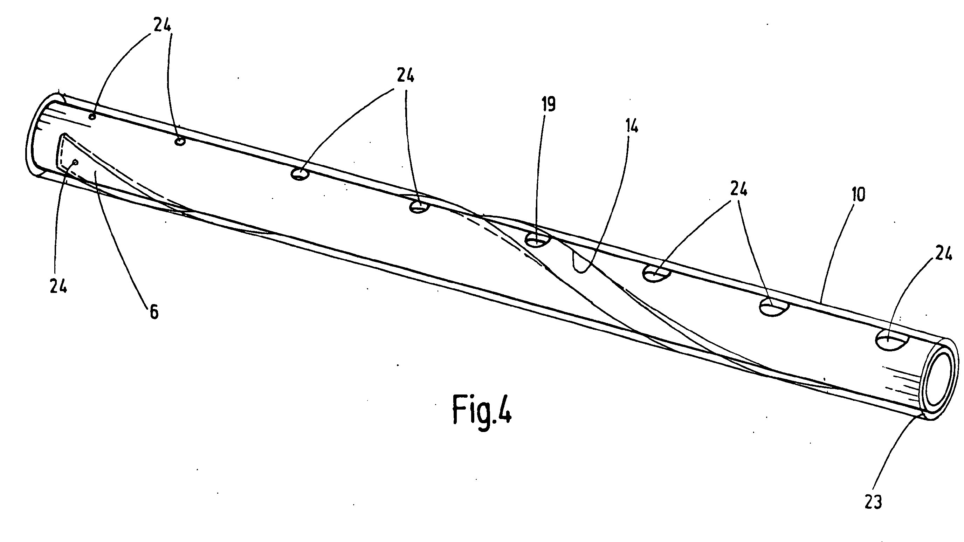

Fig. 4 zeigt eine weitere Variante, bei der der wendelförmige Schlitz 14 im äußeren Rohr 10 eine gleichbleibende Schlitzbreite über seine Länge besitzt, sich im Dämpfungsrohr 6 jedoch kein wendelförmiger Schlitz befindet, sondern stattdessen im Dämpfungsrohr 6 Lochreihen vorhanden sind, deren Löcher 24 achsparallel verlaufen, jedoch vom einen Ende 23 ausgehend jeweils eine abnehmende Lochgröße besitzen.

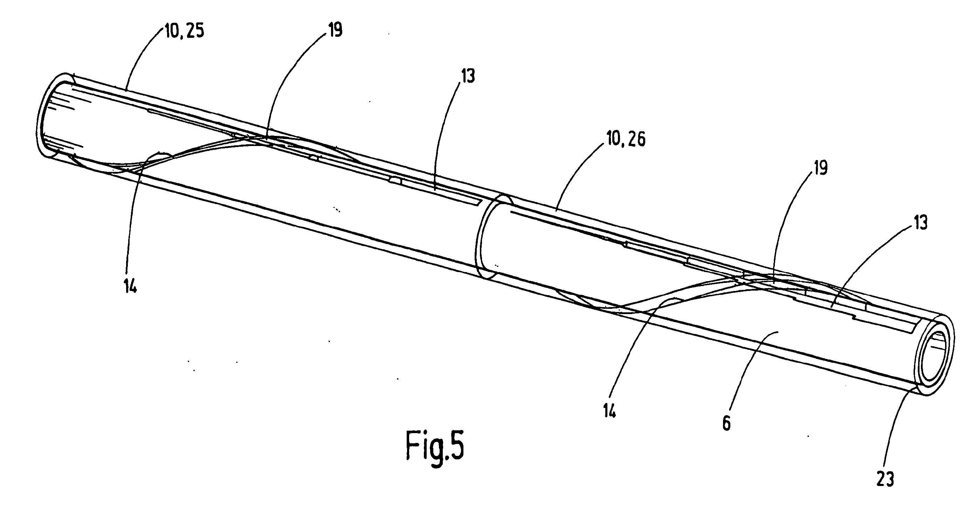

Die Fig. 5 verdeutlicht schließlich eine Variante, bei der das äußere Rohr 10 in zwei voneinander unabhängig drehbare Rohrabschnitte 25 und 26 geteilt ist, in denen sich jeweils ein wendelförmiger Schlitz 14 befindet, wobei der Schlitz 14 im Rohrabschnitt 25 eine geringere Schlitzbreite als im Rohrabschnitt 26 besitzt. Im inneren Dämpfungsrohr 6 befindet sich wiederum kein wendelförmiger Schlitz, sondern stattdessen sind gestufte, achsparallel verlaufende Schlitze 13 vorgesehen, wobei im Rohrabschnitt 26 die Schlitzbreite vom Rohrende 23 ausgehend von einem Größtwert der Schlitzbreite in Stufen bis zu einer am Ende des Rohrabschnittes 26 gegebenen kleinsten Schlitzbreite abnimmt. Im anschließenden Rohrabschnitt 25 nimmt die Breite des Schlitzes 13 wiederum in Stufen bis zum außenliegenden Ende des Rohrabschnittes 25 ab.

## Patentansprüche

1. Flüssigkeitsschalldämpfer zur Abschwächung von Druck- und/oder Schallschwingungen bei Druckfluidsystemen, mit einem Dämpfergehäuse (2) mit einer eine Gehäuselängsachse (3) definierenden Hauptabmessung und einem sich in Richtung der Gehäuselängsachse (3) zwischen einer Eintrittsöffnung (4) und einer Austrittsöffnung (5) in dem Dämpfergehäuse (2) sich erstreckenden Dämpfungsrohr (6) mit zumindest einer radialen Öffnung (7), wobei der Flüssigkeitsschalldämpfer (1) eine Einrichtung (8) zur Veränderung der Position und/oder der Größe der zumindest einen Öffnung (7) in dem Dämpfungsrohr (6) aufweist, wobei die Einrichtung (8) im Wesentlichen aus einem Rohr (10) gebildet ist, das zumindest eine radiale Öffnung (11) aufweist, die zumindest teilweise in Überdeckung mit der jeweiligen Öffnung (7) des Dämpfungsrohres (6) bringbar ist, **dadurch gekennzeichnet, dass** das Rohr (10) in Längsrichtung und/oder Umfangsrichtung des Dämpfungsrohres (6) auf diesem verschiebbargestaltet ist.

2. Flüssigkeitsschalldämpfer nach Anspruch 1, **dadurch gekennzeichnet, dass** die Einrichtung (8) zur Veränderung der Position der Öffnung (7) von einer Außenseite (9) des Dämpfergehäuses (6) betätigbar ist.

3. Flüssigkeitsschalldämpfer nach Anspruch 1 oder 2, **dadurch gekennzeichnet, dass** die Öffnung (7) des Dämpfungsrohres (6) durch einen zumindest über einen Teilbereich seiner axialen Länge (12) sich erstreckenden Schlitz (13) gebildet ist.

4. Flüssigkeitsschalldämpfer nach Anspruch 2 oder 3, **dadurch gekennzeichnet, dass** die Öffnung (11) in dem Rohr (10) durch einen wendelförmigen Schlitz (14) gebildet ist.

5. Flüssigkeitsschalldämpfer nach Anspruch 3 oder 4, **dadurch gekennzeichnet, dass** der Schlitz (13) in dem Dämpfungsrohr (6) wendelförmig ausgebildet ist.

6. Flüssigkeitsschalldämpfer nach einem der Ansprüche 3 bis 5, **dadurch gekennzeichnet, dass** die Schlitze (13,14) in dem Dämpfungsrohr (6) und in dem Rohr (10) etwa dieselbe Steigung aufweisen, wobei die Steigungsrichtungen der beiden Schlitze (13,14) invers zueinander ausgestaltet sind.

7. Flüssigkeitsschalldämpfer nach einem der Ansprüche 2 bis 6, **dadurch gekennzeichnet, dass** das Rohr (10) drehfest mit einem aus der Eintrittsöffnung (4) und/oder Austrittsöffnung (5) des Dämpfergehäuses (2) geführten Flansch (15) verbunden ist.

8. Flüssigkeitsschalldämpfer nach einem der Ansprüche 1 bis 7, **dadurch gekennzeichnet, dass** das Dämpfungsrohr (6) und/oder das Rohr (10) mehrere Öffnungen (7,11) oder Schlitze (13,14) aufweisen.

9. Flüssigkeitsschalldämpfer nach Anspruch 4, **dadurch gekennzeichnet, dass** die Schlitzbreite des wendelförmigen Schlitzes (14) des Rohres (10) vom einen Schlitzende (23) zum anderen Schlitzende hin zunimmt.

10. Flüssigkeitsschalldämpfer nach Anspruch 1 oder 2, **dadurch gekennzeichnet, dass** die Öffnung des Dämpfungsrohres (6) durch eine Reihe von Löchern (24) mit einer von einem Rohrende (23) zum anderen Rohrende hin abnehmenden Lochgröße gebildet ist.

11. Flüssigkeitsschalldämpfer nach Anspruch 3, **dadurch gekennzeichnet, dass** die Öffnung im Dämpfungsrohr (6) durch zumindest einen Schlitz (13) achsparalleler Erstreckung gebildet ist, dessen Schlitzbreite sich über die Schlitzlänge in Stufen ändert.

12. Flüssigkeitsschalldämpfer nach Anspruch 11, **dadurch gekennzeichnet, dass** zwei Schlitze (13) vorgesehen sind, dass die Schlitzbreite des einen Schlitzes von einem Rohrende (23) ausgehend bis zum Bereich der Rohrmitte in Stufen abnimmt und die Schlitzbreite des anderen Schlitzes (13) vom Bereich der Rohrmitte ausgehend zum anderen Rohrende hin in Stufen abnimmt.

13. Flüssigkeitsschalldämpfer nach Anspruch 12, **dadurch gekennzeichnet, dass** das Rohr (10) in zwei Rohrabschnitte (25, 26) geteilt ist, in jedem Rohrabschnitt (25, 26) ein wendelförmiger Schlitz (14) mit unterschiedlicher Schlitzbreite gebildet ist und die Rohrabschnitte (25, 26) voneinander unabhängig drehbar sind.

## Claims

1. A fluid acoustic damper for reducing pressure and/or noise fluctuations in pressure fluid systems, comprising a damper housing (2) with a main dimension defining a housing longitudinal axis (3) and a damping tube (2) extending in the direction of the housing longitudinal axis (3) between an inlet opening (4) and an outlet opening (5) in the damper housing (2) and that has at least one radial opening (7), the fluid acoustic damper (1) having a device (8) for changing the position and/or the size of the at least one opening (7) in the damping tube (6), the device (8) being formed essentially from a tube (10) that has at least one radial opening (11) that can be brought to at least partially overlap the respective opening (7) of the damping tube (6), **characterised in that** the tube (10) is configured to be displaceable over the damping tube (6) in the longitudinal direction and/or the circumferential direction of the latter.

2. The fluid acoustic damper according to Claim 1, **characterised in that** the device (8) for changing the position of the opening (7) can be operated from outside (9) of the damper housing (6).

3. The fluid acoustic damper according to Claim 1 or 2, **characterised in that** the opening (7) of the damping tube (6) is formed by a slot (13) extending at least over a partial region of its axial length (12).

4. The fluid acoustic damper according to Claim 2 or 3, **characterised in that** the opening (11) is formed in the tube (10) by a helical slot (14).

5. The fluid acoustic damper according to Claim 3 or 4, **characterised in that** the slot (13) in the damping tube (6) is made to be helical.

6. The fluid acoustic damper according to any of Claims 3 to 5, **characterised in that** the slots (13, 14) in the damping tube (6) and in the tube (10) have approximately the same gradient, the directions of the gradient of the two slots (13, 14) being configured to be inverse to one another.

7. The fluid acoustic damper according to any of Claims 2 to 6, **characterised in that** the tube (10) is connected non-rotatably to a flange (15) directed out of the inlet opening (4) and/or the outlet opening (5) of the damper housing (2).

8. The fluid acoustic damper according to any of Claims 1 to 7, **characterised in that** the damping tube (6) and/or the tube (10) has/have a number of openings (7, 11) or slots (13, 14).

9. The fluid acoustic damper according to Claim 4, **characterised in that** the slot width of the helical slot (14) of the tube (10) increases from one slot end (23) to the other slot end.

10. The fluid acoustic damper according to Claim 1 or 2, **characterised in that** the opening of the damping tube (6) is formed by a row of holes (24) with a hole size that decreases from one tube end (23) to the other tube end.

11. The fluid acoustic damper according to Claim 3, **characterised in that** the opening in the damping tube (6) is formed by at least one slot (13) which extends parallel to the axis, the slot width of which changes in stages over the length of the slot.

12. The fluid acoustic damper according to Claim 11, **characterised in that** two slots (13) are provided, that the slot width of one slot decreases in stages from one tube end (23) to the region of the tube middle and the slot width of the other slot (13) decreases in stages from the region of the tube middle to the other tube end.

13. The fluid acoustic damper according to Claim 12, **characterised in that** the tube (10) is divided into two tube sections (25, 26), a helical slot (14) with a different slot width is formed in each tube section (25, 26), and the tube sections (25, 26) can be turned independently of one another.

## Revendications

1. Amortisseur de bruit de liquide pour atténuer des oscillations de pression et/ou des oscillations acoustiques dans des systèmes de fluide sous pression, comprenant une enveloppe (2) d'amortisseur ayant une dimension principale définissant un axe (3) longitudinal de l'enveloppe et un tuyau (6) d'amortissement, qui s'étend dans l'enveloppe (2) de sortie dans la direction de l'axe longitudinal (3) de l'enveloppe entre une ouverture (4) d'entrée et une ouverture (5) de sortie et qui a au moins une ouverture (7) radiale, l'amortisseur (1) de bruit de liquide ayant un dispositif (8) de modification de la position et/ou de la dimension de la au moins une ouverture (7) dans le tuyau (6) d'amortissement, le dispositif (8) étant constitué essentiellement d'un tuyau (10), qui a au moins une ouverture (11) radiale, laquelle peut être mise, au moins en partie, en coïncidence avec l'ouverture (7) respective du tuyau (6) d'amortissement, **caractérisé en ce que** le tuyau (10) est conformé coulissant dans la direction longitudinale et/ou dans la direction périphérique du tuyau (6) d'amortissement sur celui-ci.

2. Amortisseur de bruit de liquide suivant la revendication 1, **caractérisé en ce que** le dispositif (8) peut être actionné d'un côté (9) extérieur de l'enveloppe (6) de l'amortisseur pour modifier la position de l'ouverture (7).

3. Amortisseur de bruit de liquide suivant la revendication 1 ou 2, **caractérisé en ce que** l'ouverture (7) du tuyau (6) d'amortissement est formée par au moins une fente (13) s'étendant au moins sur une zone partielle de l'axe (12) longitudinal du tuyau (6) d'amortissement.

4. Amortisseur de bruit de liquide suivant la revendication 2 ou 3, **caractérisé en ce que** l'ouverture (11) dans le tuyau (10) est formée par une fente (14) hélicoïdale.

5. Amortisseur de bruit de liquide suivant la revendication 3 ou 4, **caractérisé en ce que** la fente (13) est formée hélicoïdalement dans le tuyau (6) d'amortissement.

6. Amortisseur de bruit de liquide suivant l'une des revendications 3 à 5, **caractérisé en ce que** les fentes (13, 14) dans le tuyau (6) d'amortissement et dans le tuyau (10) ont à peu près le même pas, les sens des pas des deux fentes (13, 14) étant inverses l'un de l'autre.

7. Amortisseur de bruit de liquide suivant l'une des revendications 2 à 6, **caractérisé en ce que** le tuyau (10) est solidaire en rotation d'une bride (15) sortant de l'ouverture (4) d'entrée et/ou d'ouverture (5) de sortie de l'enveloppe (2) de l'amortisseur.

8. Amortisseur de bruit de liquide suivant l'une des revendications 1 à 7, **caractérisé en ce que** le tuyau (6) d'amortissement et/ou le tuyau (10) ont plusieurs ouvertures (7, 11) ou fentes (13, 14).

9. Amortisseur de bruit de liquide suivant la revendication 4, **caractérisé en ce que** la largeur de la fente (14) hélicoïdale du tuyau (10) augmente d'une extrémité (23) de la fente à l'autre extrémité de la fente.

10. Amortisseur de bruit de liquide suivant la revendication 1 ou 2, **caractérisé en ce que** l'ouverture du tuyau (6) d'amortissement est formée d'une série de trous (24) ayant une dimension décroissante d'une extrémité (23) du tuyau à l'autre extrémité du tuyau.

11. Amortisseur de bruit de liquide suivant la revendication 3, **caractérisé en ce que** l'ouverture dans le tuyau (6) d'amortissement est formée par au moins une fente (13) d'étendue parallèle à l'axe, dont la largeur se modifie par palier sur la longueur de la fente.

12. Amortisseur de bruit de liquide suivant la revendication 11, **caractérisé en ce qu'**il est prévu deux fentes (13), **en ce que** la largeur de l'une des fentes diminue par palier en partant d'une extrémité (23) du tuyau jusqu'à la partie du milieu du tuyau et la largeur de l'autre fente (13) diminue par palier en partant de la partie du milieu du tuyau à l'autre extrémité du tuyau.

13. Amortisseur de bruit de liquide suivant la revendication 12, **caractérisé en ce que** le tuyau (10) est subdivisé en deux tronçons (25, 26), dans chaque tronçon (25, 26) du tuyau est formée une fente (14) hélicoïdale de largeur différente et les tronçons (25, 26) du tuyau peuvent tourner indépendamment l'un de l'autre.
